# EUROPEAN PATENT APPLICATION

(11) **EP 4 557 692 A1**
(43) Date of publication of application: **21.05.2025**
(21) Application number: 23848905.8
(22) Date of filing: 11.04.2023
(51) Int. Cl.: H04L 45/745

(54) **MESSAGE FORWARDING METHOD, DEVICE AND SYSTEM, AND STORAGE MEDIUM**

(30) Priority: 03.08.2022 CN 202210927104; 31.10.2022 CN 202211352376
(71) Applicant: Huawei Technologies Co., Ltd., Shenzhen, Guangdong 518129 (CN)
(72) Inventor: ZHANG, Yawei, Shenzhen, Guangdong 518129 (CN); HAO, Jianwu, Shenzhen, Guangdong 518129 (CN); LIU, Chiqi, Shenzhen, Guangdong 518129 (CN)
(74) Representative: Grünecker Patent- und Rechtsanwälte PartG mbB
(86) International application number: PCT/CN2023/087576
(87) International publication number: WO 2024/027194

(57) **Abstract**

This application discloses a packet forwarding method, a device, a system, and a storage medium, and relates to the field of communication technologies. A network device receives a first packet including a first user identifier, where first node information in the first packet indicates that a next hop is a first resource pool, and sends the first packet to a service device corresponding to the first resource pool. The network device receives a second packet including a second user identifier, where the first node information in the second packet also indicates that a next hop is the first resource pool, and sends the second packet to the service device corresponding to the first resource pool. The service device determines, from the first resource pool based on the first user identifier, a first value-added service corresponding to the first packet, and determines, from the first resource pool based on the second user identifier, a second value-added service corresponding to the second packet. In the method, a corresponding value-added service can be provided without a need to create a large quantity of sub-interfaces between the network device and a resource pool. This simplifies resource pool deployment and reduces computation difficulty of path orchestration.

## Description

This application claims priorities to Chinese Patent Application No. 202210927104.1, filed on August 3, 2022 and entitled "PACKET FORWARDING METHOD, APPARATUS, DEVICE, AND STORAGE MEDIUM", and to Chinese Patent Application No. 202211352376.X, filed on October 31, 2022 and entitled "PACKET FORWARDING METHOD, DEVICE, SYSTEM, AND STORAGE MEDIUM", which are incorporated herein by reference in their entireties.

### TECHNICAL FIELD

This application relates to the field of communication technologies, and in particular, to a packet forwarding method, a device, a system, and a storage medium.

### BACKGROUND

With the development of communication technologies, in addition to providing a basic network service, an operator further provides a value-added service, for example, a security service. For example, when a user packet is forwarded, a resource pool is set beside an operator network, to implement value-added service processing for a user.

In a conventional technology, a plurality of sub-interfaces are first created between a network device and the resource pool, and one sub-interface corresponds to one user. The resource pool allocates an independent virtual system (virtual system, Vsys) to each sub-interface, and the Vsys provides a value-added service for a corresponding user. When a packet is forwarded, a control device orchestrates different forwarding paths for different users. The forwarding paths include addresses of sub-interfaces on network devices corresponding to the users, to forward packets of the different users to Vsyss corresponding to the sub-interfaces, to implement value-added service processing for a plurality of users.

However, in a packet forwarding method in the conventional technology, because a large quantity of sub-interfaces need to be created, configuration of a resource pool is complex, and automation is difficult. In addition, when a forwarding path is orchestrated, addresses of different sub-interfaces need to be distinguished. This increases difficulty in path orchestration.

### SUMMARY

This application provides a packet forwarding method, a device, a system, and a storage medium, to provide a corresponding value-added service for a user.

According to a first aspect, a packet forwarding method is provided. An example in which a network device performs the method is used. The method includes: The network device obtains a first packet and a second packet, where the first packet includes a first user identifier, the second packet includes a second user identifier, and the first user identifier is different from the second user identifier. The network device sends, on a basis that first node information in the first packet indicates a first resource pool and the first node information indicates a next hop on a forwarding path corresponding to the first packet, the first packet to a first service device corresponding to the first resource pool, to enable the first service device to determine, from the first resource pool based on the first user identifier included in the first packet, a value-added service corresponding to the first packet. Similarly, the network device sends, on a basis that the first node information in the second packet also indicates the first resource pool and the first node information also indicates a next hop on a forwarding path corresponding to the second packet, the second packet to the first service device corresponding to the first resource pool, to enable the first service device to determine, from the first resource pool based on the second user identifier included in the second packet, a value-added service corresponding to the second packet.

**In** the method, when a same resource pool provides value-added services for a plurality of users, there is no need to create a large quantity of sub-interfaces between the network device and the service device, and packets of different users may be directly sent, based on first node information included in all the packets, to service devices corresponding to a resource pool indicated by the first node information. The service device can map, based on user identifiers carried in the packets, value-added services corresponding to the different users. Therefore, in the method, sub-interface deployment of the resource pool is simplified, and different sub-interfaces of a same resource pool do not need to be distinguished during path orchestration. This reduces computation difficulty of the path orchestration.

**In** a possible implementation, a manner of obtaining the first packet and the second packet may be: receiving the first packet and the second packet. The first packet further includes a first service chain path, and the first service chain path includes node information of at least one resource pool that the first service chain path passes through. The second packet further includes a second service chain path, and the second service chain path includes node information of at least one resource pool that the second service chain path passes through. The node information of the at least one resource pool includes the first node information. The packet carries, through the included service chain path, the first node information that indicates the next hop, so that the network device can send, based on the first resource pool indicated by the first node information, the packet to the first service device corresponding to the first resource pool.

In a possible implementation, a manner of obtaining the first packet and the second packet may alternatively be: receiving a third packet and a fourth packet; obtaining a first service chain path corresponding to the third packet, and performing tunnel encapsulation on the third packet to obtain the first packet, where the first packet includes the first service chain path; and obtaining a second service chain path corresponding to the fourth packet, and performing tunnel encapsulation on the fourth packet to obtain the second packet, where the second packet includes the second service chain path, where the first service chain path includes node information of at least one resource pool that the first service chain path passes through, the second service chain path includes node information of at least one resource pool that the second service chain path passes through, and the node information of the at least one resource pool includes the first node information.

In a manner of performing tunnel encapsulation on the received packet, the packet forwarded to the resource pool carries, through the encapsulated service chain path, the first node information that indicates the next hop, so that the network device can send, based on the first resource pool indicated by the first node information, the packet to the first service device corresponding to the first resource pool.

In a possible implementation, when the third packet and the fourth packet are received, the third packet further includes a first service identifier, and the fourth packet further includes a second service identifier. The network device determines, from a plurality of optional service chain paths, an optional service chain path corresponding to the first service identifier, and uses the optional service chain path corresponding to the first service identifier as the first service chain path corresponding to the third packet. Similarly, the network device determines, from the plurality of optional service chain paths, an optional service chain path corresponding to the second service identifier, and uses the optional service chain path corresponding to the second service identifier as the second service chain path corresponding to the fourth packet. Therefore, the corresponding service chain path can be determined and obtained from the optional service chain paths by using the service identifier carried in the packet.

In a possible implementation, before determining, based on the plurality of optional service chain paths, optional service chain paths corresponding to different service identifiers, the network device first receives the plurality optional service chain paths sent by a control device, where any optional service chain path includes node information of at least one resource pool that the optional service chain path passes through. The optional service chain path is obtained by interacting with the control device. Because a computing capability of the control device is strong, the obtained optional service chain path is more accurate while computing pressure of the network device is reduced.

In a possible implementation, the first service identifier and the second service identifier are application identifiers, the first service identifier is carried in an application-aware networking (application-aware networking, APN) identifier included in the first packet, and the second service identifier is carried in an APN identifier included in the second packet. The first user identifier is carried in the APN identifier included in the first packet, and the second user identifier is carried in the APN identifier included in the second packet. The APN identifier is extended to carry the application identifier or the user identifier, so that the method can be applied to an APN network, and a forwarding capability of the APN network is enhanced.

In a possible implementation, the first packet and the second packet are segment routing over internet protocol version 6 (segment routing over IPv6 internet protocol version 6, SRv6) packets, and the first node information is a segment identifier (segment identifier, SID) of the first resource pool. An implementation of carrying the first node information in the packet is provided by using the SID in an SRv6 network, so that the carried first node identifier can indicate the next hop of the forwarding path, and the method can be applied to the SRv6 network. The resource pool may be a security resource pool, and the value-added service may be a security service.

According to a second aspect, a packet forwarding method is provided. An example in which a first service device performs the method is used. The method includes: The first service device receives a first packet and a second packet that are sent by a network device, where the first packet includes a first user identifier, the second packet includes a second user identifier, and the first user identifier is different from the second user identifier. The first service device determines, from a first resource pool based on the first user identifier, a first value-added service corresponding to the first packet, and determines, from the first resource pool based on the second user identifier, a second value-added service corresponding to the second packet. First node information in the first packet indicates that a next hop of the network device on a forwarding path of the first packet is the first resource pool, and the first node information in the second packet indicates that a next hop of the network device on a forwarding path of the second packet is the first resource pool. Therefore, the network device sends, based on the first node information, the first packet and the second packet to the first service device corresponding to the first resource pool.

In the method, when receiving different packets including different user identifiers, the service device can determine, based on the user identifiers, value-added services corresponding to the different packets. Therefore, when a same resource pool provides value-added services for a plurality of users, there is no need to create a large quantity of sub-interfaces between the network device and the service device, packets of different users may be directly received through a same interface, and the service device can map, based on user identifiers carried in the packets, value-added services corresponding to different users. Therefore, in the method, sub-interface deployment of the resource pool is simplified, and different sub-interfaces of a same resource pool do not need to be distinguished during path orchestration. This reduces computation difficulty of the path orchestration.

In a possible implementation, the first service device determines, based on a one-to-one correspondence between a plurality of identifiers and a plurality of value-added services, a value-added service corresponding to the first user identifier, and uses the value-added service corresponding to the first user identifier as the first value-added service corresponding to the first packet. Similarly, the first service device determines, based on the one-to-one correspondence between the plurality of identifiers and the plurality of value-added services, a value-added service corresponding to the second user identifier, and uses the value-added service corresponding to the second user identifier as the second value-added service corresponding to the second packet. Accurate mapping of value-added services of packets of different users is implemented by using the one-to-one correspondence between the plurality of identifiers and the plurality of value-added services, so that the provided value-added services are more accurate.

In a possible implementation, after determining, from the first resource pool based on the first user identifier, the first value-added service corresponding to the first packet, the first service device invokes a resource corresponding to the first value-added service to perform value-added service processing on the first packet; and after determining, from the first resource pool based on the second user identifier, the second value-added service corresponding to the second packet, the first service device invokes a resource corresponding to the second value-added service to perform value-added service processing on the second packet. Therefore, an effect of providing different value-added services for packets of different users is achieved, and a requirement of providing corresponding value-added services for the plurality of users is met.

In a possible implementation, after value-added service processing is performed on the first packet, when second node information in the first packet indicates a second resource pool, and the second node information indicates a next hop on the forwarding path corresponding to the first packet, the first packet is further sent to a second service device corresponding to the second resource pool. Similarly, after value-added service processing is performed on the second packet, when third node information in the second packet indicates a third resource pool, and the third node information indicates a next hop on the forwarding path corresponding to the second packet, the second packet is sent to a third service device corresponding to the third resource pool. Packets can be forwarded between different resource pools to provide more value-added services.

In a possible implementation, the first packet and the second packet are SRv6 packets, and the first node information is a SID of the first resource pool.

In a possible implementation, the first user identifier is carried in an APN identifier included in the first packet, and the second user identifier is carried in an APN identifier included in the second packet.

According to a third aspect, a packet forwarding method is provided. An example in which a control device performs the method is used. The method includes: obtaining a plurality of optional service chain paths, and sending the plurality of optional service chain paths to a network device. Any optional service chain path includes node information of at least one resource pool that the optional service chain path passes through, the plurality of optional service chain paths include a first service chain path corresponding to a first packet and a second service chain path corresponding to a second packet, first node information included in the first service chain path indicates a next hop of a network device on a forwarding path corresponding to the first packet, the first node information included in the second service chain path indicates a next hop of the network device on a forwarding path corresponding to the second packet, and the first node information indicates a first resource pool. Therefore, the network device can forward the first packet based on the first service chain path in the plurality optional service chain paths, and forward the second packet based on the second service chain path in the plurality of optional service chain paths.

In the method, the resource pool is directly used as a forwarding node for path orchestration, and different sub-interfaces of a same resource pool do not need to be distinguished. This reduces computation difficulty of the path orchestration.

In a possible implementation, the control device can obtain SIDs respectively corresponding to the plurality of resource pools. In this case, the control device may perform path orchestration based on the SIDs respectively corresponding to the plurality of resource pools, to obtain the plurality of optional service chain paths, where the node information of the at least one resource pool included in the optional service chain path is a SID respectively corresponding to the at least one resource pool.

According to a fourth aspect, a packet forwarding method is provided. The method includes: A network device obtains a first packet and a second packet, where the first packet includes a first user identifier, the second packet includes a second user identifier, and the first user identifier is different from the second user identifier. The network device sends, on a basis that first node information in the first packet indicates a first resource pool, the first packet to a first service device corresponding to the first resource pool, where the first node information indicates a next hop on a forwarding path corresponding to the first packet; sends, on a basis that the first node information in the second packet indicates the first resource pool, the second packet to the first service device corresponding to the first resource pool, where the first node information indicates a next hop on a forwarding path corresponding to the second packet. The first service device receives the first packet and the second packet that are sent by the network device. The first service device determines, from the first resource pool based on the first user identifier, a first value-added service corresponding to the first packet, and determines, from the first resource pool based on the second user identifier, a second value-added service corresponding to the second packet.

In a possible implementation, the control device obtains a plurality of optional service chain paths. Any optional service chain path includes node information of at least one resource pool that the optional service chain path passes through, the plurality of optional service chain paths include a first service chain path corresponding to the first packet and a second service chain path corresponding to the second packet, the first node information included in the first service chain path indicates a next hop of the network device on the forwarding path corresponding to the first packet, the first node information included in the second service chain path indicates a next hop of the network device on a forwarding path corresponding to the second packet, and the first node information indicates the first resource pool. The control device sends the plurality of optional service chain paths to the network device, where the plurality of optional service chain paths are used by the network device to obtain the first service chain path and the second service chain path.

According to a fifth aspect, a packet forwarding apparatus is provided. The apparatus is used in a network device, and includes:
an obtaining module, configured to obtain a first packet and a second packet, where the first packet includes a first user identifier, the second packet includes a second user identifier, and the first user identifier is different from the second user identifier; and
a sending module, configured to send, on a basis that first node information in the first packet indicates a first resource pool, the first packet to a first service device corresponding to the first resource pool, where the first node information indicates a next hop on a forwarding path corresponding to the first packet, and a first user identifier included in the first packet is used by the first service device to determine, from the first resource pool, a value-added service corresponding to the first packet; and send, on a basis that the first node information in the second packet indicates the first resource pool, the second packet to the first service device corresponding to the first resource pool, where the first node information indicates a next hop on the forwarding path corresponding to the second packet, and a second user identifier included in the second packet is used by the first service device to determine, from the first resource pool, a value-added service corresponding to the second packet.

In a possible implementation, the first packet further includes a first service chain path corresponding to the first packet, and the first service chain path includes node information of at least one resource pool that the first service chain path passes through. The second packet further includes a second service chain path corresponding to the second packet, the second service chain path includes node information of at least one resource pool that the second service chain path passes through, and the node information of the at least one resource pool includes the first node information.

In a possible implementation, the obtaining module is configured to: receive a third packet, obtain a first service chain path corresponding to the third packet, and perform tunnel encapsulation on the third packet to obtain the first packet, where the first packet includes the first service chain path; receive a fourth packet, obtain a second service chain path corresponding to the fourth packet, and perform tunnel encapsulation on the fourth packet to obtain the second packet, where the second packet includes the second service chain path, where the first service chain path includes node information of at least one resource pool that the first service chain path passes through, the second service chain path includes node information of at least one resource pool that the second service chain path passes through, and the node information of the at least one resource pool includes the first node information.

In a possible implementation, the third packet further includes a first service identifier, and the fourth packet further includes a second service identifier.

The obtaining module is configured to determine, from a plurality of optional service chain paths, an optional service chain path corresponding to the first service identifier, and use the optional service chain path corresponding to the first service identifier as the first service chain path corresponding to the third packet.

The obtaining module is configured to determine, from the plurality of optional service chain paths, an optional service chain path corresponding to the second service identifier, and use the optional service chain path corresponding to the second service identifier as the second service chain path corresponding to the fourth packet.

In a possible implementation, the apparatus further includes:
a receiving module, configured to receive the plurality of optional service chain paths sent by a first control device, where any optional service chain path includes node information of at least one resource pool that the optional service chain path passes through.

In a possible implementation, the first service identifier and the second service identifier are application identifiers, the first service identifier is carried in an APN identifier included in the first packet, and the second service identifier is carried in an APN identifier included in the second packet.

In a possible implementation, the first packet and the second packet are SRv6 packets, and the first node information is a SID of the first resource pool.

In a possible implementation, the first user identifier is carried in an APN identifier included in the first packet, and the second user identifier is carried in an APN identifier included in the second packet.

According to a sixth aspect, a packet forwarding apparatus is provided. The apparatus is used in a first service device, and the apparatus includes:
a receiving module, configured to receive a first packet and a second packet that are sent by a network device, where the first packet includes a first user identifier, the second packet includes a second user identifier, first node information in the first packet indicates that a next hop of a network device on a forwarding path of the first packet is a first resource pool, and the first node information in the second packet indicates that a next hop of the network device on a forwarding path of the second packet is the first resource pool; and
a determining module, configured to determine, from the first resource pool based on the first user identifier, a first value-added service corresponding to the first packet, and determine, from the first resource pool based on the second user identifier, a second value-added service corresponding to the second packet.

In a possible implementation, the determining module is configured to: determine, based on a one-to-one correspondence between a plurality of identifiers and a plurality of value-added services, a value-added service corresponding to the first user identifier, and use the value-added service corresponding to the first user identifier as the first value-added service corresponding to the first packet; and determine, based on the one-to-one correspondence between the plurality of identifiers and the plurality of value-added services, a value-added service corresponding to the second user identifier, and use the value-added service corresponding to the second user identifier as the second value-added service corresponding to the second packet.

In a possible implementation, the apparatus further includes:
a sending module, configured to send, on a basis that second node information in the first packet indicates a second resource pool, the first packet to a second service device corresponding to the second resource pool, where the second node information indicates a next hop on the forwarding path corresponding to the first packet; and send, on a basis that third node information in the second packet indicates a third resource pool, the second packet to a third service device corresponding to the third resource pool, where the third node information indicates a next hop on the forwarding path corresponding to the second packet.

In a possible implementation, the apparatus further includes:
a processing module, configured to invoke a resource corresponding to the first value-added service to perform value-added service processing on the first packet, and invoking a resource corresponding to the second value-added service to perform value-added service processing on the second packet.

In a possible implementation, the first packet and the second packet are SRv6 packets, and the first node information is a SID of the first resource pool.

In a possible implementation, the first user identifier is carried in an APN identifier included in the first packet, and the second user identifier is carried in an APN identifier included in the second packet.

According to a seventh aspect, a packet forwarding apparatus is provided. The apparatus is used in a control device, and includes:
a first obtaining module, configured to obtain a plurality of optional service chain paths, where any optional service chain path includes node information of at least one resource pool that the optional service chain path passes through, the plurality of optional service chain paths include a first service chain path corresponding to a first packet and a second service chain path corresponding to a second packet, first node information included in the first service chain path indicates a next hop of a network device on a forwarding path corresponding to the first packet, the first node information included in the second service chain path indicates a next hop of the network device on a forwarding path corresponding to the second packet, and the first node information indicates a first resource pool; and
a sending module, configured to send the plurality of optional service chain paths to the network device, where the network device is configured to forward the first packet based on a first service chain path in the plurality optional service chain paths, and forward the second packet based on a second service chain path in the plurality of optional service chain paths.

In a possible implementation, the apparatus further includes:
a second obtaining module, configured to obtain SIDs respectively corresponding to a plurality of resource pools; and
a first obtaining module, configured to perform path orchestration based on the SIDs respectively corresponding to the plurality of resource pools, to obtain the plurality of optional service chain paths, where the node information of the at least one resource pool included in the optional service chain path is a SID respectively corresponding to the at least one resource pool.

According to an eighth aspect, a network device is provided. The network device includes: a processor, where the processor is coupled to a memory, the memory stores at least one program instruction or code, and the at least one program instruction or the code is loaded and executed by the processor, to enable the network device to implement the packet forwarding method according to any one of the first aspect, the second aspect, or the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a ninth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, the communication apparatus is enabled to perform the method according to any one of the first aspect or the possible implementations of the first aspect, or perform the method according to any one of the second aspect or the possible implementations of the second aspect, perform the method according to any one of the third aspect or the possible implementations of the third aspect, or perform the method according to any one of the fourth aspect or the possible implementations of the fourth aspect.

According to a tenth aspect, a packet forwarding system is provided. The packet forwarding system includes a network device, a first service device, and a control device.

The network device is configured to perform the method according to any one of the first aspect or the possible implementations of the first aspect, the first service device is configured to perform the method according to any one of the second aspect or the possible implementations of the second aspect, and the control device is configured to perform the method according to any one of the third aspect or the possible implementations of the third aspect.

According to an eleventh aspect, a computer-readable storage medium is provided. The storage medium stores at least one instruction, and the instruction is loaded and executed by a processor, to enable a computer to implement the method according to any one of the first aspect or the possible implementations of the first aspect, implement the method according to any one of the second aspect or the possible implementations of the second aspect, implement the method according to any one of the third aspect or the possible implementations of the third aspect, or implement the method according to any one of the fourth aspect or the possible implementations of the fourth aspect.

According to a twelfth aspect, a computer program (product) is provided. The computer program (product) includes computer program code, and when the computer program code is run by a computer, the computer is enabled to perform the methods in the foregoing aspects.

According to a thirteenth aspect, a chip is provided. The chip includes a processor, configured to invoke instructions from a memory and execute the instructions stored in the memory, to enable a communication device on which the chip is installed to perform the method according to any one of the foregoing aspects.

According to a fourteenth aspect, another chip is provided. The chip includes an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the foregoing aspects.

It should be understood that, for beneficial effects achieved by the technical solutions in the fourth aspect to the fourteenth aspect and corresponding possible implementations of this application, refer to the technical effects of the first aspect to the third aspect and the corresponding possible implementations. Details are not described herein again.

### BRIEF DESCRIPTION OF DRAWINGS

FIG. 1 is a diagram of resource pool deployment in a conventional technology according to an embodiment of this application;
FIG. 2 is a diagram of an implementation environment according to an embodiment of this application;
FIG. 3 is an interaction diagram of a packet forwarding method according to an embodiment of this application;
FIG. 4 is another diagram of resource pool deployment according to an embodiment of this application;
FIG. 5 is a diagram of a structure of a resource pool according to an embodiment of this application;
FIG. 6 is a diagram of a packet forwarding process according to an embodiment of this application;
FIG. 7 is a diagram of a structure of a packet forwarding apparatus according to an embodiment of this application;
FIG. 8 is a diagram of a structure of another packet forwarding apparatus according to an embodiment of this application; and
FIG. 9 is a diagram of a structure of still another packet forwarding apparatus according to an embodiment of this application;
FIG. 10 is a diagram of a structure of a network device according to an embodiment of this application;
FIG. 11 is a diagram of a structure of another network device according to an embodiment of this application; and
FIG. 12 is a diagram of a structure of a server according to an embodiment of this application.

### DESCRIPTION OF EMBODIMENTS

To make the objectives, technical solutions, and advantages of this application clearer, the following further describes the implementations of this application in detail with reference to the accompanying drawings.

When providing a value-added service, for example, a security service for a user, an operator usually sets at least one resource pool beside an operator network. Compared with that each resource pool provides a corresponding value-added service for a single user, the operator expects that each resource pool can provide corresponding value-added services for a plurality of users. Therefore, when a resource pool is deployed, the resource pool needs to have a capability of identifying different value-added services corresponding to different users. In a conventional technology, a manner of creating different sub-interfaces for different users is used to implement a capability of identifying different value-added services for the different users.

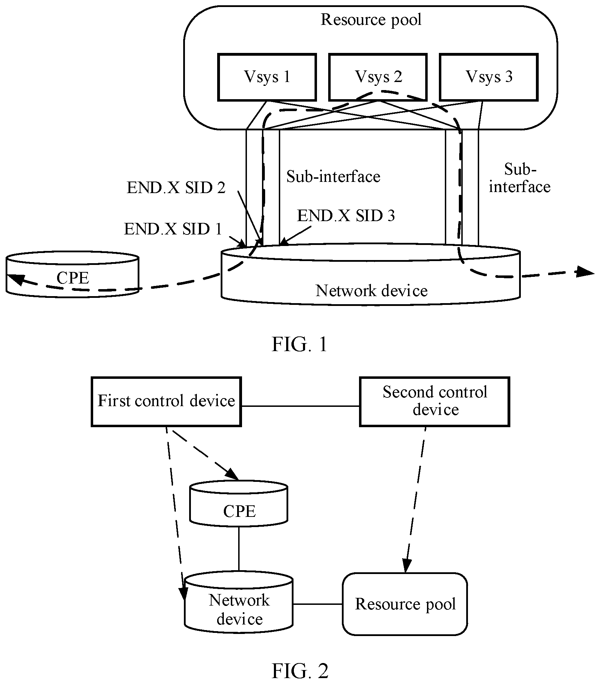

For example, FIG. 1 is a diagram of resource pool deployment in a conventional technology according to an embodiment of this application. As shown in FIG. 1, a plurality of sub-interfaces are created between a network device and a resource pool, one sub-interface corresponds to one user, and each sub-interface includes a corresponding endpoint (endpoint, END).X SID. The resource pool allocates an independent Vsys to each sub-interface. Further, when path orchestration is performed on a forwarded packet, the END.X SID of each sub-interface is used as a node on a forwarding path, so that packets of different users are forwarded to Vsyss corresponding to different sub-interfaces, so that different Vsyss provide corresponding value-added services for different users. The Vsyss are a plurality of independent logical devices that are divided from a physical device, and network isolation can be implemented between the virtual systems. The End.X SID is a type of SID and indicates the network device to forward a packet through an outbound interface specified by the End.X SID.

For example, a sub-interface 1 corresponds to a user 1, a SID of the sub-interface 1 is an END.X SID 1, and the sub-interface 1 is connected to a Vsys 1. In this case, the network device receives a first packet sent by a customer premise equipment (customer premise equipment, CPE) of the user 1. A forwarding path corresponding to the first packet includes the END.X SID 1, and the END.X SID 1 indicates that a next hop of the first packet is the sub-interface 1. The network device sends the packet to the Vsys 1 through the sub-interface 1, to provide, for the user 1 by using the Vsys 1, a value-added service corresponding to the user 1.

A sub-interface 2 corresponds to a user 2, a SID of the sub-interface 2 is an END.X SID 2, and the sub-interface 2 is connected to a Vsys 2. In this case, the network device receives a second packet sent by a CPE of the user 2. A forwarding path corresponding to the second packet includes the END.X SID 2, and the END.X SID 2 indicates that a next hop of the second packet is the sub-interface 2. The network device sends the second packet to the Vsys 2 through the sub-interface 2, to provide, for the user 2 by using the Vsys 2, a value-added service corresponding to the user 2. In other words, in the conventional technology, when the network device forwards packets of different users, the packets of the different users correspond to different next hops. In this way, an effect of providing different value-added services for the different users is achieved.

However, in a deployment solution of the resource pool shown in FIG. 1, a large quantity of sub-interfaces need to be created between the network device and the resource pool, to implement value-added service processing for a plurality of users. Consequently, configuration of the resource pool is complex, and automation is difficult. In addition, during path orchestration, because different users correspond to different sub-interfaces, different forwarding paths need to be orchestrated for the different users, so that the different forwarding paths include END.X SIDs of corresponding sub-interfaces, increasing computation difficulty of path orchestration.

Embodiments of this application provide a packet forwarding method. For a resource pool that provides value-added services for a plurality of users, in the method, when forwarding packets of different users to the resource pool, the packets are directly sent to service devices corresponding to the resource pool without distinguishing between different sub-interfaces, and the service devices determine, by using different user identifiers carried in the packets, value-added services corresponding to the different users in the resource pool. Therefore, in the method, there is no need to create a large quantity of sub-interfaces between a network device and the resource pool. This simplifies configuration of the resource pool. In addition, during path orchestration, for a plurality of users in a same resource pool, there is no need to orchestrate different forwarding paths for different users based on different sub-interfaces. This reduces computation difficulty of the path orchestration.

FIG. 2 is a diagram of an implementation environment according to an embodiment of this application. As shown in FIG. 2, the implementation environment includes a CPE, a network device, a resource pool, a first control device, and a second control device. Communication connections are established between the CPE and the network device, between the network device and the resource pool, and between the first control device and the second control device. The first control device is configured to control the CPE and the network device, for example, deliver an orchestrated forwarding path to the CPE and the network device. The second control device is configured to control the resource pool, for example, deliver a corresponding SID and a one-to-one correspondence between a plurality of service identifiers and a plurality of value-added services to the resource pool.

A quantity of network devices and a quantity of resource pools are not limited in this embodiment of this application. The first control device and the second control device may be deployed on a same physical device, or may be deployed on different physical devices. For example, the network device may be at least one of a provider edge (provider edge, PE) device, a provider (provider, P) device, a network PE device, or a cloud PE device. The resource pool may be an entity device or a cloud managed device. When the resource pool is a cloud managed device, the resource pool may also be referred to as a cloud-based resource pool. Both the first control device and the second control device may be network control engines (network control engines, NCEs).

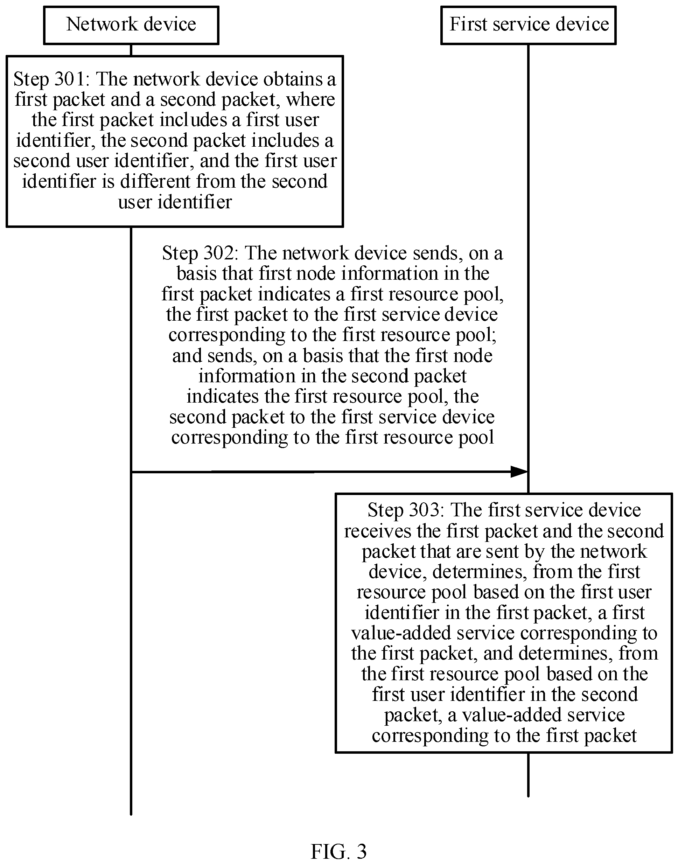

The packet forwarding method provided in embodiments of this application may be applied to the implementation environment shown in FIG. 2. The packet forwarding method provided in embodiments of this application is described by using the network device and the resource pool as an example. One resource pool corresponds to one service device, and the service device is an execution body corresponding to the resource pool. In other words, the resource pool performs, via the corresponding service device, the packet forwarding method provided in embodiments of this application. For example, refer to FIG. 3. The packet forwarding method includes the following step 301 to step 303.

Step 301: The network device obtains a first packet and a second packet, where the first packet includes a first user identifier, the second packet includes a second user identifier, and the first user identifier is different from the second user identifier.

In this embodiment of this application, the network device is a previous-hop network device that is on forwarding paths of the first packet and the second packet and that enters a resource pool of a security network, for example, any network device connected to the resource pool in the implementation environment shown in FIG. 2. The security network is a network that includes the resource pool.

The first packet may carry the first user identifier, and the first user identifier is used to distinguish between a user corresponding to the first user identifier and a different value-added service corresponding to another user. For example, an operator configures corresponding user identifiers for different users, and sends the configured user identifiers to a CPE used by the corresponding users, so that the CPE can obtain the user identifiers of the different users, and include the user identifiers in the first packet.

Optionally, the first packet received by the network device may be a first packet sent by a CPE 1, and the CPE 1 is an ingress node on the forwarding path of the first packet. The second packet received by the network device may be a second packet sent by a CPE 2, and the CPE 2 is an ingress node on the forwarding path of the second packet. The CPE 1 is a terminal used by a user 1, and the CPE 2 is a terminal used by a user 2.

The user 1 is used as an example. The user 1 may lease a value-added service from the operator via the CPE 1, and the operator orchestrates packet forwarding paths for different value-added services of the CPE 1 and delivers the packet forwarding paths to the CPE 1. Further, when the user 1 requests a corresponding value-added service via the CPE 1, the CPE 1 can transmit a corresponding packet based on a corresponding forwarding path. For example, the CPE 1 sends the first packet to the network device based on the forwarding path, so that the network device receives the first packet. That the CPE 1 sends the first packet to the network device based on the forwarding path may be that the CPE 1 sends the first packet to the network device via at least one intermediate node on the forwarding path.

In a possible implementation, the forwarding path is obtained by a control device through orchestration, and the control device may be the first control device shown in FIG. 2. For example, the first control device performs end-to-end path orchestration on a plurality of different value-added services by using a plurality of resource pools included in the security network as forwarding nodes, to obtain a plurality of optional service chain paths, and then sends the plurality of optional service chain paths to the CPE. Different value-added services correspond to different service identifiers, and one optional service chain path corresponds to one service identifier. Therefore, the CPE can obtain forwarding paths corresponding to the different value-added services.

In this embodiment of this application, the resource pool is directly used as the forwarding node for path orchestration, while different sub-interfaces that are on the network device and that are connected to the resource pool are used as forwarding nodes in a conventional technology. Therefore, for the first packet and the second packet that are sent by different users to a same resource pool, the forwarding paths corresponding to the first packet and the second packet indicate a same next hop that is a first resource pool. Optionally, because transmission manners of a packet in a network are different, manners in which the network device obtains the first packet and the second packet include but are not limited to the following two manners.

Manner 1: The first packet and the second packet are received. The first packet further includes a first service chain path corresponding to the first packet, and the first service chain path includes node information of at least one resource pool that the first service chain path passes through. The second packet further includes a second service chain path corresponding to the second packet, and the second service chain path includes node information of at least one resource pool that the second service chain path passes through. The node information of the at least one resource pool includes first node information.

In the manner 1, the first packet carries the first node information by using the included first service chain path, and the second packet carries the first node information by using the included second service chain path. Optionally, the first service chain path carried in the first packet is obtained by the ingress node through encapsulation, and the second service chain path carried in the second packet is obtained by the ingress node through encapsulation.

For example, the first packet is used as an example. When sending the first packet, the ingress node CPE 1 performs tunnel encapsulation on the first packet, so that the first packet can carry, based on a tunnel-encapsulated packet header, an end-to-end service chain path corresponding to the first packet. The end-to-end service chain path includes an end-to-end forwarding path starting from the CPE, and a forwarding path that is in the end-to-end service chain path and that enters the resource pool is the first service chain path in this embodiment of this application. In other words, the end-to-end service chain path includes node information of at least one network device and node information of at least one resource pool, and the first service chain path includes the node information of the at least one resource pool.

Therefore, after receiving the first packet, the network device identifies the first service chain path included in the first packet. When the first node information that is in the first service chain path and that indicates a next hop of the network device is node information of the first resource pool, the network device determines to send the first packet to a first service device corresponding to the first resource pool. Similarly, after receiving the second packet, the network device identifies the second service chain path included in the second packet. When the first node information that is in the second service chain path and that indicates a next hop of the network device is also the node information of the first resource pool, the network device determines to also send the second packet to the first service device corresponding to the first resource pool.

Optionally, the first packet and the second packet may be SRv6 packets. In an SRv6 communication scenario, the node information of the at least one network device and the node information of the at least one resource pool that are on the end-to-end service chain path are a SID of the at least one network device and a SID of the at least one resource pool. A type of the SID is not limited in this embodiment of this application, and the SID may be an END SID or an END.X SID.

In a possible implementation, a second control device allocates corresponding SIDs to a plurality of network devices included in a communication network and a plurality of resource pools included in the security network, and then the second control device sends, to the first control device, the SIDs respectively corresponding to the plurality of network devices and the plurality of resource pools. Further, the first control device receives the SIDs that respectively correspond to the plurality of network devices and the plurality of resource pools and that are sent by the second control device, and performs path orchestration based on the SIDs respectively corresponding to the plurality of network devices and the plurality of resource pools, to obtain a plurality of optional service chain paths. Any optional service chain path indicates, by using a SID of a corresponding resource pool, that a next hop is any resource pool.

Manner 2: A third packet is received, and a first service chain path corresponding to the third packet is obtained, and tunnel encapsulation is performed on the third packet to obtain the first packet, where the first packet includes the first service chain path. A fourth packet is received, a second service chain path corresponding to the fourth packet is obtained, and tunnel encapsulation is performed on the fourth packet to obtain the second packet, where the second packet includes the second service chain path.

The first service chain path includes node information of at least one resource pool that the first service chain path passes through, the second service chain path includes node information of at least one resource pool that the second service chain path passes through, and the node information of the at least one resource pool includes the first node information. Therefore, the first packet carries the first node information by using the encapsulated first service chain path, and the second packet carries the first node information by using the encapsulated second service chain path. It may be understood that the first packet is obtained by encapsulating the first service chain path into the third packet, and the first service chain path corresponding to the first packet and the first service chain path corresponding to the second packet are a same first service chain path.

In the manner 2, the received third packet does not carry a corresponding first service chain path entering the resource pool, and the received fourth packet does not carry a corresponding second service chain path entering the resource pool. It may be understood that the network device is also a previous-hop device for the third packet and the fourth packet to enter the resource pool. Therefore, after receiving the third packet and the fourth packet, the network device needs to obtain service chain paths that respectively correspond to the third packet and the fourth packet and that enter the resource pool, to obtain, through encapsulation, the first packet corresponding to the third packet and the second packet corresponding to the fourth packet. Optionally, a manner of obtaining the service chain path entering the resource pool is not limited in this embodiment of this application.

For example, the third packet further carries a first service identifier, the fourth packet further carries a second service identifier, and the first service identifier and the second service identifier are used to distinguish between different value-added services. Optionally, the first service identifier and the second service identifier may be application identifiers or differentiated services code point (differentiated services code point, DSCP) identifiers. When the first service identifier and the second service identifier are different application identifiers, the different application identifiers are used to distinguish between different applications, to restrict, by using the different application identifiers, applications that need to enter a value-added service chain. When the first service identifier and the second service identifier are different DSCP identifiers, the different DSCP identifiers are used to distinguish between different quality levels, to restrict, by using the different DSCP identifiers, quality levels that need to enter the value-added service chain. The value-added service chain is a service chain that is in an end-to-end forwarding path and that includes a resource pool as a forwarding node, for example, the first service chain path and the second service chain path. A value-added service chain that needs to be entered is a resource pool that needs to be entered to perform corresponding value-added service processing.

In a possible implementation, the third packet is used as an example. When sending the third packet, the CPE 1 further includes the first service identifier in the third packet. When sending the fourth packet, the CPE 2 further includes the second service identifier in the fourth packet. Although the third packet does not carry the first service chain path, the ingress node CPE 1 also performs tunnel encapsulation on the third packet. However, a packet header obtained by performing tunnel encapsulation on the third packet carries a forwarding path that corresponds to the third packet and that exists before the CPE 1 enters the resource pool, and does not include the first service chain forwarding path that enters the resource pool. Therefore, after receiving the third packet, the network device needs to identify the first service identifier in the third packet, and determine, based on the identified first service identifier, whether the third packet needs to enter the value-added service chain. When the first service identifier indicates that the third packet needs to enter the value-added service chain, the network device obtains the first service chain path that corresponds to the third packet and that enters the resource pool.

Because the network device is the previous-hop network device that enters the resource pool, the third packet has been transmitted in the communication network, and enters the security network from the network device, in other words, enters the value-added service chain. Therefore, the first service chain path obtained by the network device includes the node information of the at least one resource pool, and does not include node information of the network device in the communication network. For example, egress information of the first service chain path corresponding to the third packet is the node information of the first resource pool.

In this embodiment of this application, that the first service identifier and the second service identifier are application identifiers is used as an example. After performing path orchestration to obtain a plurality of optional service chain paths, the first control device further sends the plurality of optional service chain paths to the network device. The network device can obtain the plurality of optional service chain paths and an application identifier corresponding to each optional service chain path. In this case, after obtaining the first service identifier included in the first packet, the network device can determine, from the plurality of optional service chain paths, an optional service chain path corresponding to the first service identifier, and use the optional service chain path corresponding to the first service identifier as the first service chain path corresponding to the third packet. Similarly, after obtaining the second service identifier included in the fourth packet, the network device can determine, from the plurality of optional service chain paths, an optional service chain path corresponding to the second service identifier, and use the optional service chain path corresponding to the second service identifier as the second service chain path corresponding to the fourth packet.

Therefore, in the foregoing manner 1 and manner 2, the obtained first packet carries the first service chain path, and the second packet carries the second service chain path, so that a forwarding node that subsequently receives the first packet, for example, the first service device, can forward the first packet based on the first service chain path corresponding to the first packet, and a forwarding node that subsequently receives the second packet, for example, the first service device, can forward the second packet based on the second service chain path corresponding to the second packet.

Step 302: The network device sends, on a basis that the first node information in the first packet indicates the first resource pool, the first packet to the first service device corresponding to the first resource pool; and sends, on a basis that the first node information in the second packet indicates the first resource pool, the second packet to the first service device corresponding to the first resource pool.

If the first node information indicates a next hop of the network device on the forwarding path, the first node information in the first packet indicates a next hop on the forwarding path corresponding to the first packet, and the first node information in the second packet indicates a next hop on the forwarding path corresponding to the second packet. Therefore, for the forwarding paths of the first packet and the second packet that include different user identifiers, a same next hop is the first resource pool, that is, the network device may perform a same forwarding behavior for different users, without a need to deploy different sub-interfaces for different users.

After the first packet and the second packet are obtained, it can be learned from the foregoing manner 1 and manner 2 of obtaining the first packet and the second packet that the first packet and the second packet carry the first node information, and the first node information indicates that the next hop of the network device is the first resource pool. In addition, because the first service device is an execution body corresponding to the first resource pool, when the next hop indicated by the forwarding path is the first resource pool, the network device can determine to send the packets to the first service device corresponding to the first resource pool.

Optionally, in an APN scenario, for example, the first packet includes the first user identifier and the first service identifier, and the first service identifier is a first application identifier. The first user identifier and the first application identifier may be carried in an APN identifier included in the first packet. For example, the APN identifier is configured as a first field and a second field. The first field is used to carry the first application identifier, and the second field is used to carry the first service identifier. APN in this embodiment of this application may be application-aware IPv6 networking APN6. The APN identifier may be carried in an IPv6 packet header or an IPv6 extension header. For example, the APN identifier is encapsulated in the IPv6 packet header or the IPv6 extension header in a form of a TLV field.

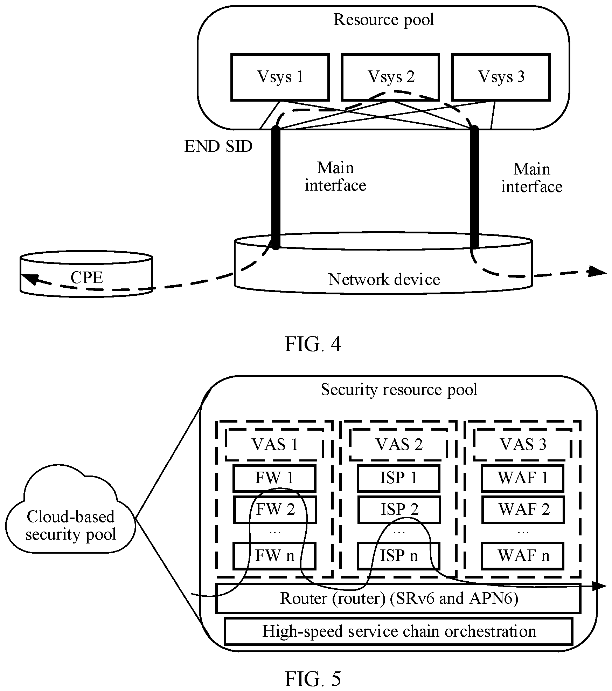

In this embodiment of this application, because packet forwarding can be implemented without distinguishing between different sub-interfaces between the network device and the first resource pool, configuration of the resource pool is simplified. For example, as shown in FIG. 4, in this embodiment of this application, a main interface is created between a network device and a first resource pool, and the network device sends, through a main interface to the first service device corresponding to the first resource pool, packets that carry different user identifiers. In the SRv6 communication scenario, one resource pool, instead of one sub-interface of one user in the resource pool, corresponds to one SID. This simplifies a SID configuration operation. Optionally, a SID type of the resource pool may be an END SID, and indicates the network device to forward a packet by searching an IPv6 routing table.

If one resource pool provides value-added services for a large quantity of users, to perform load sharing, the resource pool may alternatively correspond to a plurality of SIDs. For example, for a total quantity of users in a same resource pool, the total quantity of users is load-balanced to a plurality of SIDs. For example, a first quantity of users corresponds to a first SID in the resource pool, a second quantity of users corresponds to a second SID in the resource pool, and both the first quantity and the second quantity are greater than 1. In this case, although one resource pool corresponds to a plurality of SIDs, each SID also corresponds to a plurality of users, while one sub-interface corresponds to one user in the conventional technology. This can also effectively simplify resource pool deployment.

Step 303: The first service device receives the first packet and the second packet that are sent by the network device, determines, from the first resource pool based on the first user identifier in the first packet, a first value-added service corresponding to the first packet, and determines, from the first resource pool based on the second user identifier in the second packet, a second value-added service corresponding to the second packet.

In this embodiment of this application, the second control device configures a one-to-one correspondence between a plurality of identifiers and a plurality of value-added services for each resource pool, and the second control device sends the configured one-to-one correspondence between the plurality of identifiers and the plurality of value-added services to a service device corresponding to each resource pool. In this way, the service device corresponding to each resource pool includes the one-to-one correspondence between the plurality of identifiers in the resource pool and the plurality of value-added services. For example, the second control device configures the one-to-one correspondence between the plurality of identifiers and the plurality of value-added services for the first resource pool, and sends the one-to-one correspondence between the plurality of identifiers and the plurality of value-added services to the first service device corresponding to the first resource pool.

Optionally, the first service device determines, based on the one-to-one correspondence between the plurality of identifiers and the plurality of value-added services, a value-added service corresponding to the first user identifier included in the first packet, and uses the value-added service corresponding to the first user identifier included in the first packet as the first value-added service corresponding to the first packet. Similarly, the first service device determines, based on the one-to-one correspondence between the plurality of identifiers and the plurality of value-added services, a value-added service corresponding to the second user identifier included in the second packet, and uses the value-added service corresponding to the second user identifier included in the second packet as a second value-added service corresponding to the second packet.

Therefore, based on the configured one-to-one correspondence between the plurality of identifiers and the plurality of value-added services, the first user identifier carried in the first packet, and the second user identifier carried in the second packet, the resource pool can also map different value-added services based on different first user identifiers and second user identifiers without a need to create a plurality of sub-interfaces. When the first user identifier and the second user identifier are different user identifiers, the resource pool can also implement value-added service processing for a plurality of users without a need to create a plurality of sub-interfaces.

Therefore, the first service device determines, from the first resource pool based on the first user identifier, the first value-added service corresponding to the first packet, and determines, from the first resource pool based on the second user identifier, the second value-added service corresponding to the second packet. This implements mapping of different value-added services. Then, the first service device may invoke a resource corresponding to the first value-added service to perform value-added service processing on the first packet, and invoke a resource corresponding to the second value-added service to perform value-added service processing on the second packet.

For example, the one-to-one correspondence between the plurality of user identifiers and the plurality of value-added services may be shown in Table 1. Table 1 shows three user identifiers and a value-added service corresponding to each user identifier. The value-added service includes at least one of a firewall (firewall, FW), an intrusion prevention system (intrusion prevention system, IPS), or a web application firewall (web application firewall, WAF). In this embodiment of this application, the value-added service may correspond to a Vsys connected to each sub-interface shown in FIG. 1.

**Table 1**

| User identifier | Value-added service |
|---|---|
| 0x11 | FW 1-IPS 2 |
| 0x12 | IPS 2-WAF 1 |
| 0x13 | FW 1-IPS 4-WAF 2 |

For example, refer to FIG. 5. That a resource pool is a cloud-based security pool is used as an example. A security resource pool corresponding to the cloud-based security pool may include high-speed service chain orchestration, a router (router), and a plurality of value-added services (value-added services, VASs). The high-speed service chain orchestration is used to orchestrate paths for different value-added services. The router is configured to support an SRv6 forwarding capability and provide a capability of identifying different users based on an APN identifier. Optionally, each VAS includes n (where n is a positive integer) FWs, IPSs, or WAFs. The FWs, the IPSs, or the WAFs are configured to perform value-added service processing on the first packet.

In this embodiment of this application, the first service device corresponding to the first resource pool may be the router. For example, the value-added service FW 1-IPS 2 corresponding to the first user identifier 0x11 is used as an example. A process in which the router processes the first packet is: sending the first packet to an FW 1 in a VAS 1, where the FW 1 performs value-added service processing on the first packet, then sending the first packet to an IPS 2 in a VAS 2, where the IPS 2 performs value-added service processing on the first packet, and finally forwarding the first packet to a next forwarding node based on a service link path based on the SRv6 forwarding capability.

In a possible implementation, after the first service device performs value-added service processing on the first packet based on the corresponding first value-added service, the first service device sends, on a basis that second node information indicates a next hop on the forwarding path of the first packet for the first service chain path included in the first packet, and the second node information indicates a second resource pool, the first packet to a second service device corresponding to the second resource pool. Similarly, after the first service device performs value-added service processing on the second packet based on the corresponding first value-added service, the first service device sends, on a basis that third node information indicates a next hop on the forwarding path of the second packet for the second service chain path included in the second packet, and the third node information indicates a third resource pool, the second packet to a third service device corresponding to the third resource pool. The second resource pool and the third resource pool may be a same resource pool, or may be different resource pools.

According to the packet forwarding method provided in this embodiment of this application, when a same resource pool provides value-added services for a plurality of users, there is no need to create a large quantity of sub-interfaces between the network device and the service device, packets of different users may be directly sent to the service device corresponding to the resource pool, and the service device can map, based on user identifiers carried in the packets, value-added services corresponding to the different users. Therefore, in the method, sub-interface deployment of the resource pool is simplified, and different sub-interfaces of a same resource pool do not need to be distinguished during path orchestration. This reduces computation difficulty of the path orchestration.

The following describes the packet forwarding method provided in embodiments of this application by using an example in which an implementation environment of the packet forwarding method is an SRv6+APN6 scenario, a value-added service is a security service, a resource pool is a cloud-based security pool, and a first packet is forwarded. The first packet is an SRv6 packet, a service identifier is an application identifier, and a user identifier and the application identifier are carried in an APN identifier of the first packet.

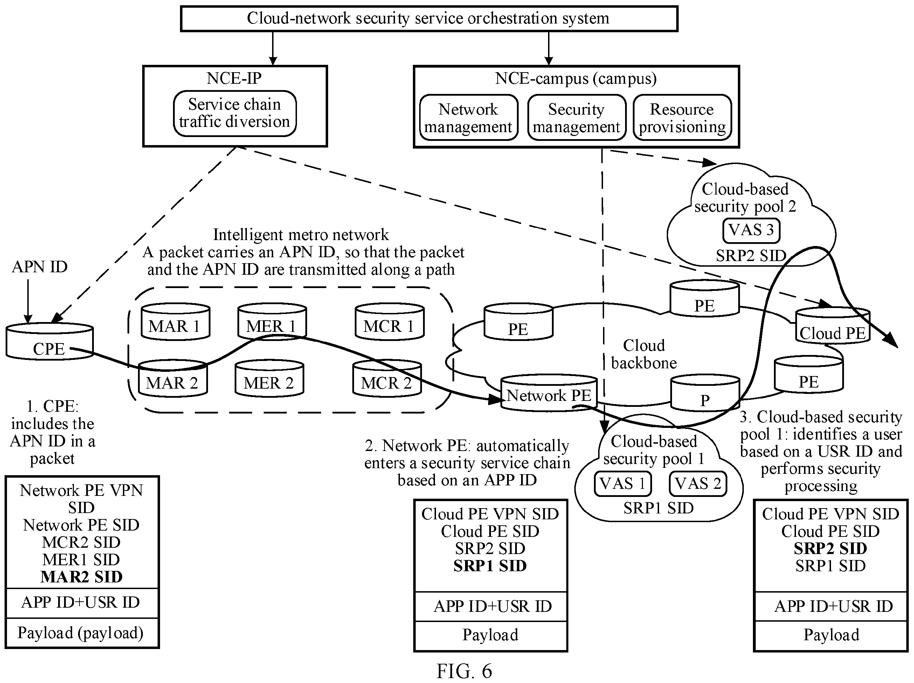

FIG. 6 is a diagram of a packet forwarding process according to an embodiment of this application. As shown in FIG. 6, the implementation environment includes a cloud-network security service orchestration system, an NCE-IP, an NCE-campus (campus), a CPE, a cloud-based security pool, an intelligent metro network, and a cloud backbone. A network PE device corresponds to an execution body, namely, a network device, in embodiments of this application, the NCE-IP corresponds to a first control device in embodiments of this application, the NCE-campus corresponds to a second control device in embodiments of this application, a cloud-based security pool 1 corresponds to a first security resource pool in embodiments of this application, and a cloud-based security pool 2 corresponds to a second security resource pool in embodiments of this application.

The cloud-network security service orchestration system may be integrated into a service orchestrator of an operator to provide operations and maintenance interfaces for administrators and users and implement end-to-end orchestration of a security service. The cloud-network security service orchestration system interconnects with service users of the operator through northbound interfaces, and interconnects with the NCE-IP and the NCE-campus through southbound interfaces. The northbound interface (northbound interface) may be an interface for connecting a lower-level device to a higher-level device, and may be used to read and control a lower device. On the contrary, the southbound interface (southbound interface) is an interface for connecting the higher-level device to the lower-level device, and the southbound interface may be used to implement transmission and communication with a host computer. It may be understood that a difference between "southbound" and "northbound" lies in different locations in a system structure. Generally, it is specified that an upper direction indicates north and a down direction indicates south. For example, in a topology shown in FIG. 6, the cloud-network security service orchestration system interconnects with the NCE-IP and the NCE-campus in a southbound direction. This means that the cloud-network security service orchestration system is downwardly connected to the NCE-IP and the NCE-campus.

As a network controller, the NCE-IP provides a service chain traffic diversion function and is responsible for management, control, and analysis of a bearer network. In embodiments of this application, end-to-end SRv6 policy (Policy) path orchestration for the network device and the security resource pool is added to the NCE-IP, in other words, the security resource pool is used as a forwarding node on a path. The NCE-IP interconnects with the cloud-network security service orchestration system in a northbound direction, and interconnects with network devices in the intelligent metro network and the cloud backbone in the southbound direction. An SRv6 policy can meet an end-to-end service requirement and is a main mechanism for implementing SRv6 network programming.

As a security controller, the NCE-campus provides functions such as network management, security management, and resource provisioning. The security management is used to manage a security resource pool. In embodiments of this application, deployment of a SID of the security resource pool, deployment of a template of a user identifier (user identifier, USR ID) in an APN identifier (identifier, ID), and deployment of a correspondence between the USR ID and a security service are added to the NCE-campus. The NCE-campus interconnects with the cloud-network security service orchestration system of the operator in the northbound direction, and interconnects with the security resource pool in the southbound direction.

For example, the NCE-campus deploys a storage resource pool (storage resource pool, SRP) 1 SID for the cloud-based security pool 1, and deploys an SRP2 SID for the cloud-based security pool 2. The NCE-IP performs path orchestrations by using the SRP1 SID and the SRP2 SID as forwarding nodes to obtain a security service chain path and delivers the security service chain path to the CPE and the network PE device.

The security resource pool (also referred to as a cloud-based security pool) is used to process the security service. In embodiments of this application, the security resource pool supports deployment of an SRv6 SID, an SRv6 packet forwarding capability, identification of a USR ID in an APN ID, and mapping between the USR ID and a security service. The security resource pool interconnects with the NCE-campus through in the northbound direction. The security resource pool is managed and controlled by the NCE-campus. The cloud-based security pool 1 includes a VAS 1 and a VAS 2, and the cloud-based security pool 2 includes a VAS 3.

The intelligent metro network includes a plurality of metro access routers (metro access routers, MARs), a plurality of metro edge routers (metro edge routers, MERs), a plurality of metro core routers (metro core routers, MCRs), and the like. The cloud backbone includes a plurality of PE devices, network PE devices, cloud PE devices, P devices, and the like.

As shown in Figure 6, the CPE generates an SRv6 packet. The SRv6 packet includes a payload (payload). The CPE includes the APN ID in the SRv6 packet. The APN ID includes an APP ID and the USR ID. The CPE encapsulates a segment routing header (segment routing header, SRH) through an SRv6 tunnel. The SRH includes a MAR2 SID, a MER1 SID, an MCR2 SID, a network PE SID, and a network PE VPN SID from bottom to top. In this case, the MAR2 SID, the MER1 SID, the MCR2 SID, the network PE SID, and the network PE VPN SID are node information on a service chain forwarding path. Therefore, the CPE sends, on a basis that the MAR2 SID included in the SRH indicates that a next hop is a MAR 2, the SRv6 packet to the MAR 2. The SRv6 packet is transmitted by the MAR 2, a MER 1, and an MCR 2 to the network PE device through the intelligent metro network. During transmission, the SRv6 packet carries the APN ID, so that the APN ID and the packet are transmitted along the path.

Optionally, after receiving the SRv6 packet, the network PE device automatically enters a security service chain by identifying the APP ID in the packet. The network PE device obtains the security service chain forwarding path corresponding to the APP ID and changes the SRH encapsulated in the SRv6 packet to the security service chain forwarding path. In other words, the SRH includes the SRP2 SID, the SRP1 SID, the cloud PE SID, and the cloud PE VPN SID. The network PE device sends, on a basis that the SRP2 SID included in the SRH indicates that a next hop is the cloud-based security pool 1, the SRv6 packet to the cloud-based security pool 1.

After receiving the SRv6 packet, the cloud-based security pool 1 identifies the USR ID in the SRv6 packet, maps the corresponding security service based on the USR ID, and completes service processing on the SRv6 packet based on the mapped security service. Then, the cloud-based security pool 1 sends, on a basis that the SRP1 SID included in the SRH indicates that a next hop is the cloud-based security pool 2, the SRv6 packet to the cloud-based security pool 2.

Therefore, in the SRv6+APN6-based security service chain solution, the APN ID carries the APP ID and USR ID, and the APP ID is used to enter the security service chain. The USR ID is used to map a corresponding security service. In this way, the network and the security service are decoupled, and a problem of complex deployment of sub-interfaces between the network device and the resource pool is effectively resolved.

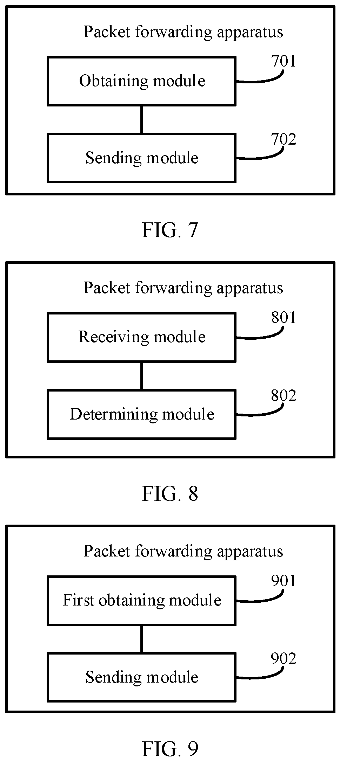

The foregoing describes the packet forwarding method in embodiments of this application. Corresponding to the foregoing method, an embodiment of this application further provides a packet forwarding apparatus. FIG. 7 is a diagram of a structure of a packet forwarding apparatus according to an embodiment of this application. The apparatus is used in a first network device, and the first network device is the network device shown in FIG. 3. Based on the following a plurality of modules shown in FIG. 7, the packet forwarding apparatus shown in FIG. 7 can perform all or some operations performed by the network device. It should be understood that the apparatus may include more additional modules than the shown modules, or some of the shown modules are omitted. This is not limited in this embodiment of this application. As shown in FIG. 7, the apparatus includes:
an obtaining module 701, configured to obtain a first packet and a second packet, where the first packet includes a first user identifier, the second packet includes a second user identifier, and the first user identifier is different from the second user identifier; and
a sending module 702, configured to send, on a basis that first node information in the first packet indicates a first resource pool, the first packet to a first service device corresponding to the first resource pool, where the first node information indicates a next hop on a forwarding path corresponding to the first packet, and a first user identifier included in the first packet is used by the first service device to determine, from the first resource pool, a value-added service corresponding to the first packet; send, on a basis that the first node information in the second packet indicates the first resource pool, the second packet to the first service device corresponding to the first resource pool, where the first node information indicates a next hop on the forwarding path corresponding to the second packet, and a second user identifier included in the second packet is used by the first service device to determine, from the first resource pool, a value-added service corresponding to the second packet.

In a possible implementation, the first packet further includes a first service chain path corresponding to the first packet, and the first service chain path includes node information of at least one resource pool that the first service chain path passes through. The second packet further includes a second service chain path corresponding to the second packet, the second service chain path includes node information of at least one resource pool that the second service chain path passes through, and the node information of the at least one resource pool includes the first node information.

In a possible implementation, the obtaining module 701 is configured to: receive a third packet, obtain a first service chain path corresponding to the third packet, and perform tunnel encapsulation on the third packet to obtain the first packet, where the first packet includes the first service chain path; receive a fourth packet, obtain a second service chain path corresponding to the fourth packet, and perform tunnel encapsulation on the fourth packet to obtain the second packet, where the second packet includes the second service chain path, where the first service chain path includes node information of at least one resource pool that the first service chain path passes through, the second service chain path includes node information of at least one resource pool that the second service chain path passes through, and the node information of the at least one resource pool includes the first node information.

In a possible implementation, the third packet further includes a first service identifier, and the fourth packet further includes a second service identifier.

The obtaining module 701 is configured to determine, from a plurality of optional service chain paths, an optional service chain path corresponding to the first service identifier, and use the optional service chain path corresponding to the first service identifier as the first service chain path corresponding to the third packet.

The obtaining module 701 is configured to determine, from the plurality of optional service chain paths, an optional service chain path corresponding to the second service identifier, and use the optional service chain path corresponding to the second service identifier as the second service chain path corresponding to the fourth packet.

In a possible implementation, the apparatus further includes:
a receiving module, configured to receive the plurality of optional service chain paths sent by a first control device, where any optional service chain path includes node information of at least one resource pool that the optional service chain path passes through.

In a possible implementation, the first service identifier and the second service identifier are application identifiers, the first service identifier is carried in an APN identifier included in the first packet, and the second service identifier is carried in an APN identifier included in the second packet.

In a possible implementation, the first packet and the second packet are SRv6 packets, and the first node information is a SID of the first resource pool.

In a possible implementation, the first user identifier is carried in an APN identifier included in the first packet, and the second user identifier is carried in an APN identifier included in the second packet.

FIG. 8 is a diagram of a structure of a packet forwarding apparatus according to an embodiment of this application. The apparatus is used in a first service device, and the first service device is the first service device shown in FIG. 3. Based on the following a plurality of modules shown in FIG. 8, the packet forwarding apparatus shown in FIG. 8 can perform all or some operations performed by the first service device. It should be understood that the apparatus may include more additional modules than the shown modules, or some of the shown modules are omitted. This is not limited in this embodiment of this application. As shown in FIG. 8, the apparatus includes:
a receiving module 801, configured to receive a first packet and a second packet that are sent by a network device, where the first packet includes a first user identifier, the second packet includes a second user identifier, first node information in the first packet indicates that a next hop of a network device on a forwarding path of the first packet is a first resource pool, and the first node information in the second packet indicates that a next hop of the network device on a forwarding path of the second packet is the first resource pool; and
a determining module 802, configured to determine, from the first resource pool based on the first user identifier, a first value-added service corresponding to the first packet, and determine, from the first resource pool based on the second user identifier, a second value-added service corresponding to the second packet.

In a possible implementation, the determining module 802 is configured to determine, based on a one-to-one correspondence between a plurality of identifiers and a plurality of value-added services, a value-added service corresponding to the first user identifier, and uses the value-added service corresponding to the first user identifier as the first value-added service corresponding to the first packet; and the determining module determines, based on the one-to-one correspondence between the plurality of identifiers and the plurality of value-added services, a value-added service corresponding to the second user identifier, and uses the value-added service corresponding to the second user identifier as the second value-added service corresponding to the second packet.

In a possible implementation, the apparatus further includes:
a sending module, configured to send, on a basis that second node information in the first packet indicates a second resource pool, the first packet to a second service device corresponding to the second resource pool, where the second node information indicates a next hop on the forwarding path corresponding to the first packet; and send, on a basis that third node information in the second packet indicates a third resource pool, the second packet to a third service device corresponding to the third resource pool, where the third node information indicates a next hop on the forwarding path corresponding to the second packet.

In a possible implementation, the apparatus further includes:
a processing module, configured to invoke a resource corresponding to the first value-added service to perform value-added service processing on the first packet, and invoking a resource corresponding to the second value-added service to perform value-added service processing on the second packet.

In a possible implementation, the first packet and the second packet are SRv6 packets, and the first node information is a SID of the first resource pool.

In a possible implementation, the first user identifier is carried in an APN identifier included in the first packet, and the second user identifier is carried in an APN identifier included in the second packet.

FIG. 9 is a diagram of a structure of a packet forwarding apparatus according to an embodiment of this application. The apparatus is used in a first control device. Based on the following a plurality of modules shown in FIG. 9, the packet forwarding apparatus shown in FIG. 9 can perform all or some operations performed by the control device. It should be understood that the apparatus may include more additional modules than the shown modules, or some of the shown modules are omitted. This is not limited in this embodiment of this application. As shown in FIG. 9, the apparatus includes:
a first obtaining module 901, configured to obtain a plurality of optional service chain paths, where any optional service chain path includes node information of at least one resource pool that the optional service chain path passes through, the plurality of optional service chain paths include a first service chain path corresponding to a first packet and a second service chain path corresponding to a second packet, the first node information included in the first service chain path indicates a next hop of a network device on a forwarding path corresponding to the first packet, the first node information included in the second service chain path indicates a next hop of the network device on a forwarding path corresponding to the second packet, and the first node information indicates a first resource pool; and
a sending module 902, configured to send the plurality of optional service chain paths to the network device, where the network device is configured to forward the first packet based on a first service chain path in the plurality optional service chain paths, and forward the second packet based on a second service chain path in the plurality of optional service chain paths.

In a possible implementation, the apparatus further includes:
a second obtaining module, configured to obtain SIDs respectively corresponding to a plurality of resource pools; and
a first obtaining module 901, configured to perform path orchestration based on the SIDs respectively corresponding to the plurality of resource pools, to obtain the plurality of optional service chain paths, where the node information of the at least one resource pool included in the optional service chain path is a SID respectively corresponding to the at least one resource pool.

According to the packet forwarding apparatus provided in this embodiment of this application, when a same resource pool provides value-added services for a plurality of users, there is no need to create a large quantity of sub-interfaces between the network device and the service device, packets of different users may be directly sent to service devices corresponding to the resource pool, and the service device can map, based on user identifiers carried in the packets, value-added services corresponding to the different users. Therefore, the apparatus simplifies sub-interface deployment of the resource pool, and different sub-interfaces of a same resource pool do not need to be distinguished during path orchestration. This reduces computation difficulty of the path orchestration.

It should be understood that, when the apparatus provided in FIG. 7 to FIG. 9 implements functions of the apparatus, division of the foregoing functional modules is merely used as an example for description. During actual application, the foregoing functions may be allocated to different functional modules for implementation according to a requirement. In other words, an internal structure of the device is divided into different functional modules to implement all or part of the functions described above. In addition, the apparatuses provided in the foregoing embodiments and the method embodiments belong to a same concept. For specific implementation processes thereof, refer to the method embodiments. Details are not described herein again.

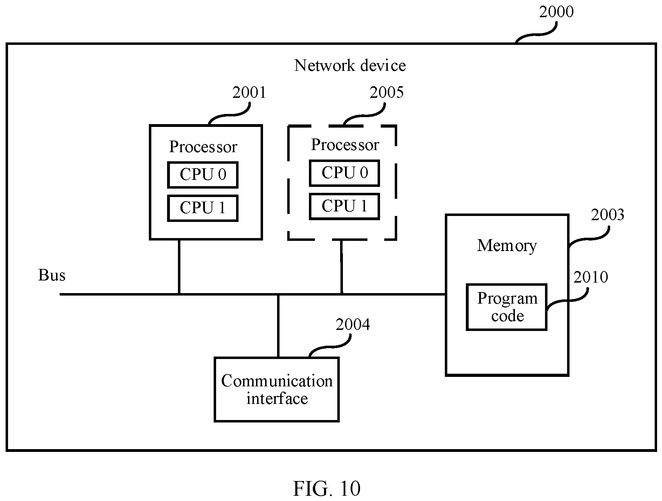

FIG. 10 is a diagram of a structure of a network device 2000 according to an example embodiment of this application. The network device 2000 shown in FIG. 10 is configured to perform operations related to the packet forwarding method shown in FIG. 3. The network device 2000 is, for example, a switch or a router, and the network device 2000 may be implemented by using a general bus architecture.

As shown in FIG. 10, the network device 2000 includes at least one processor 2001, a memory 2003, and at least one communication interface 2004.

The processor 2001 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solution in this application. For example, the processor 2001 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination of processors implementing a computing function, for example, a combination including one or more microprocessors, or a combination of a DSP and a microprocessor.

Optionally, the network device 2000 further includes a bus. The bus is configured to transmit information between components of the network device 2000. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of indication, the bus is indicated by using only one line in FIG. 10. However, it does not indicate that there is only one bus or only one type of bus.

The memory 2003 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or other optical disk storage, an optical disk storage (including compact disc, laser disc, optical disc, digital versatile disc, Blu-ray disc, and the like), a magnetic disk storage medium or another magnetic storage device, or any other medium that can be used to carry or store desired program code in a form of instructions or a data structure and that can be accessed by a computer, but is not limited thereto. For example, the memory 2003 exists independently, and is connected to the processor 2001 through the bus. Alternatively, the memory 2003 and the processor 2001 may be integrated together.

The communication interface 2004 is any apparatus such as a transceiver, and is configured to communicate with another device or a communication network. The communication network may be an Ethernet, a radio access network (radio access network, RAN), a wireless local area network (wireless local area network, WLAN), or the like. The communication interface 2004 may include a wired communication interface, and may further include a wireless communication interface. Specifically, the communication interface 2004 may be an ethernet (Ethernet) interface, a fast ethernet (Fast Ethernet, FE) interface, a gigabit ethernet (Gigabit Ethernet, GE) interface, an asynchronous transfer mode (Asynchronous Transfer Mode, ATM) interface, a wireless local area network (wireless local area networks, WLAN) interface, a cellular network communication interface, or a combination thereof. The Ethernet interface may be an optical interface, an electrical interface, or a combination thereof. In this embodiment of this application, the communication interface 2004 may be used by the network device 2000 to communicate with another device.

During specific implementation, in an embodiment, the processor 2001 may include one or more CPUs, for example, a CPU 0 and a CPU 1 shown in FIG. 10. Each of these processors may be a single-core CPU (single-core CPU), or may be a multi-core CPU (multi-core CPU). The processor herein may be one or more devices, circuits, and/or processing cores configured to process data (for example, computer program instructions).

In a specific implementation, as an embodiment, the network device 2000 may include a plurality of processors such as the processor 2001 and the processor 2005 shown in FIG. 10. Each of these processors may be a single-core CPU (single-core CPU), or may be a multi-core CPU (multi-core CPU) processor. The processor herein may be one or more devices, circuits, and/or processing cores configured to process data (for example, computer program instructions).

During specific implementation, in an embodiment, the network device 2000 may further include an output device and an input device. The output device communicates with the processor 2001, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 2001, and may receive an input from a user in a plurality of manners. For example, the input device may be a mouse, a keyboard, a touchscreen device, or a sensing device.

In some embodiments, the memory 2003 is configured to store program code 2010 for executing the solutions of this application, and the processor 2001 may execute the program code 2010 stored in the memory 2003. In other words, the network device 2000 may implement, by using the processor 2001 and the program code 2010 in the memory 2003, the packet forwarding method provided in the method embodiment. The program code 2010 may include one or more software modules. Optionally, the processor 2001 may also store program code or instructions for executing the solutions of this application.

In a specific embodiment, the network device 2000 in this embodiment of this application may correspond to the first network device in the foregoing method embodiments, and the processor 2001 in the network device 2000 reads instructions in the memory 2003, so that the network device 2000 shown in FIG. 10 can perform all or some operations performed by the network device.

Specifically, the processor 2001 is configured to obtain a first packet and a second packet, where the first packet includes a first user identifier, the second packet includes a second user identifier, and the first user identifier is different from the second user identifier; the network device sends, on a basis that the first node information in the first packet indicates the first resource pool and the first node information indicates a next hop on a forwarding path corresponding to the first packet, the first packet to a first service device corresponding to the first resource pool; and similarly, the network device sends, on a basis that the first node information in the second packet also indicates the first resource pool and the first node information also indicates a next hop on a forwarding path corresponding to the second packet, the second packet to the first service device corresponding to the first resource pool.

For brevity, another optional implementation is not described herein again.

For another example, the network device 2000 in this embodiment of this application may correspond to the first service device in the foregoing method embodiments, and the processor 2001 in the network device 2000 reads instructions in the memory 2003, so that the network device 2000 shown in FIG. 10 can perform all or some operations performed by the first service device.

Specifically, the processor 2001 receives a first packet and a second packet that are sent by a network device, where the first packet includes a first user identifier, the second packet includes a second user identifier, and the first user identifier is different from the second user identifier; and the processor 2001 determines, from a first resource pool based on the first user identifier, a first value-added service corresponding to the first packet, and determines, from the first resource pool based on the second user identifier, a second value-added service corresponding to the second packet.

For brevity, another optional implementation is not described herein again.

The network device 2000 may further correspond to the packet forwarding apparatus shown in FIG. 7-9, and each function module in the packet forwarding apparatus is implemented by using software of the network device 2000. In other words, the function modules included in the packet forwarding apparatus are generated after the processor 2001 of the network device 2000 reads the program code 2010 stored in the memory 2003.

Steps of the packet forwarding method shown in FIG. 3 are completed by using an integrated logic circuit of hardware in a processor of the network device 2000 or instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory, and completes the steps of the foregoing methods in combination with hardware of the processor. To avoid repetition, details are not described herein again.

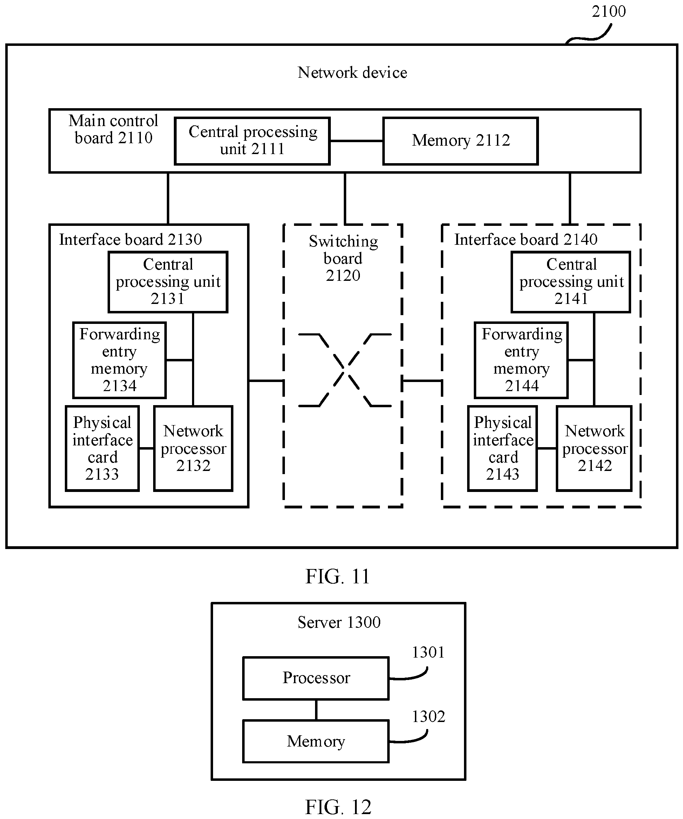

FIG. 11 is a diagram of a structure of a network device 2100 according to another example embodiment of this application. The network device 2100 shown in FIG. 11 is configured to perform all or some operations in the packet forwarding method shown in FIG. 3. The network device 2100 is, for example, a switch or a router. The network device 2100 may be implemented by a generic bus architecture.

As shown in FIG. 11, the network device 2100 includes a main control board 2110 and an interface board 2130.

The main control board is also referred to as a main processing unit (main processing unit, MPU) or a route processor card (route processor card). The main control board 2110 is configured to: control and manage each component in the network device 2100, including functions of route calculation, device management, device maintenance, and protocol processing. The main control board 2110 includes: a central processing unit 2111 and a memory 2112.

The interface board 2130 is also referred to as a line processing unit (line processing unit, LPU), a line card (line card), or a service board. The interface board 2130 is configured to: provide various service interfaces and implement data packet forwarding. The service interfaces include but are not limited to an Ethernet interface, a POS (Packet over SONET/SDH) interface, and the like. The Ethernet interface is, for example, a Flexible Ethernet Client (Flexible Ethernet Client, FlexE Client). The interface board 2130 includes a central processing unit 2131, a network processor 2132, a forwarding entry memory 2134, and a physical interface card (physical interface card, PIC) 2133.

The central processing unit 2131 on the interface board 2130 is configured to: control and manage the interface board 2130 and communicate with the central processing unit 2111 on the main control board 2110.

The network processor 2132 is configured to implement packet forwarding processing. A form of the network processor 2132 may be a forwarding chip. The forwarding chip may be a network processor (network processor, NP). In some embodiments, the forwarding chip may be implemented by using an application-specific integrated circuit (application-specific integrated circuit, ASIC) or a field programmable gate array (field programmable gate array, FPGA). Specifically, the network processor 2132 is configured to forward a received packet based on a forwarding table stored in the forwarding entry memory 2134. If a destination address of the packet is an address of the network device 2100, the network processor 2132 sends the packet to a CPU (for example, the central processing unit 2131) for processing. If a destination address of the packet is not an address of the network device 2100, the network processor 2132 finds, from the forwarding table based on the destination address, a next hop and an egress interface that correspond to the destination address, and forwards the packet to the egress interface corresponding to the destination address. Processing an uplink packet may include: processing an inbound interface of the packet and searching a forwarding table. Processing a downlink packet may include: searching a forwarding table, and the like. In some embodiments, the central processing unit may also perform a function of a forwarding chip, for example, implement software forwarding based on a general-purpose CPU, so that no forwarding chip is required in the interface board.

The physical interface card 2133 is configured to implement a physical layer interconnection function, so that original traffic enters the interface board 2130, and a processed packet is sent out from the physical interface card 2133. The physical interface card 2133 is also referred to as a sub-card, may be installed on the interface board 2130, and is responsible for converting an optical/electrical signal into a packet, performing validity check on the packet, and then forwarding the packet to the network processor 2132 for processing. In some embodiments, the central processing unit 2131 may also perform a function of the network processor 2132, for example, implement software forwarding based on a general-purpose CPU. Therefore, the network processor 2132 is not required in the physical interface card 2133.

Optionally, the network device 2100 includes a plurality of interface boards. For example, the network device 2100 further includes an interface board 2140. The interface board 2140 includes a central processing unit 2141, a network processor 2142, a forwarding entry memory 2144, and a physical interface card 2143. Functions and implementations of components in the interface board 2140 are the same as or similar to those of the interface board 2130, and details are not described herein again.

Optionally, the network device 2100 further includes a switching board 2120. The switching board 2120 may also be referred to as a switch fabric unit (switch fabric unit, SFU). When the network device 2100 has a plurality of interface boards, the switching board 2120 is configured to perform data exchange between the interface boards. For example, the interface board 2130 and the interface board 2140 may communicate with each other by using the switching board 2120.

The main control board 2110 is coupled to the interface board. For example, the main control board 2110, the interface board 2130, the interface board 2140, and the switching board 2120 are connected to a system backboard by using a system bus for interworking. In a possible implementation, an inter-process communication (inter-process communication, IPC) protocol channel is established between the main control board 2110, the interface board 2130, and the interface board 2140. The main control board 2110 communicates with the interface board 2130 and the interface board 2140 through the IPC channel.

Logically, the network device 2100 includes a control plane and a forwarding plane. The control plane includes a main control board 2110 and a central processing unit 2111. The forwarding plane includes components that perform forwarding, such as a forwarding entry memory 2134, a physical interface card 2133, and a network processor 2132. The control plane performs functions such as a router, generating a forwarding table, processing signaling and protocol packets, and configuring and maintaining a state of the network device. The control plane delivers the generated forwarding table to the forwarding plane. On the forwarding plane, the network processor 2132 searches, based on the forwarding table delivered by the control plane, a table for forwarding the packet received by the physical interface card 2133. The forwarding table delivered by the control plane may be stored in the forwarding entry memory 2134. In some embodiments, the control plane and the forwarding plane may be completely separated, and are not on a same network device.

It should be noted that there may be one or more main control boards, and when there are a plurality of main control boards, a primary main control board and a secondary main control board may be included. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Therefore, a data access and processing capability of a network device of a distributed architecture is greater than that of a network device of a centralized architecture. Optionally, the form of the network device may alternatively be a single board. That is, there is no switch fabric board, and functions of the interface board and the main control board are integrated into the board. In this case, the central processing unit on the interface board and the central processing unit on the main control board may be combined into one central processing unit on the board. The one central processing unit on the board performs functions of the two central processing units existing after the two central processing units are combined. The network device in this form has low data exchange and processing capabilities (for example, a network device such as a low-end switch or router). A specific architecture that is to be used depends on a specific networking deployment scenario. This is not limited herein.

In a specific embodiment, the network device 2100 corresponds to the packet forwarding apparatus applied to the network device shown in FIG. 7. In some embodiments, the obtaining module 701 in the packet forwarding apparatus shown in FIG. 7 is equivalent to the central processing unit 2111 or the network processor 2132 in the network device 2100, and the sending module 702 is equivalent to the physical interface card 2133 in the network device 2100.

In some embodiments, the network device 2100 further corresponds to the packet forwarding apparatus applied to the first service device shown in FIG. 8. In some embodiments, the receiving module 801 in the packet forwarding apparatus shown in FIG. 8 is equivalent to the physical interface card 2133 in the network device 2100, and the determining module 802 is equivalent to the central processing unit 2111 or the network processor 2132 in the network device 2100.

FIG. 12 is a diagram of a structure of a server according to an embodiment of this application. The server 1300 may have a large difference due to different configurations or performance, and may include one or more processors 1301 and one or more memories 1302. The one or more memories 1302 store at least one computer program, and the at least one computer program is loaded and executed by the one or more processors 1301, so that the server implements the packet forwarding method provided in the foregoing method embodiments. Certainly, the server 1300 may further have components such as a wired or wireless network interface, a keyboard, and an input/output interface, to perform input/output. The server 1300 may further include another component configured to implement a function of the device. Details are not described herein.

Based on the network devices shown in FIG. 10 and FIG. 11 and the server shown in FIG. 12, an embodiment of this application further provides a packet forwarding system. The processing system includes: a network device, a first service device, and a control device. For example, the network device and the first service device are the network device 2000 shown in FIG. 10 or the network device 2100 shown in FIG. 11, and the control device is the server shown in FIG. 12. For the packet forwarding method executed by the network device, the first service device, and the control device, refer to related descriptions of the embodiment shown in FIG. 3. Details are not described herein again.

An embodiment of this application further provides a communication apparatus. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. When the processor executes the instructions stored in the memory, the processor is enabled to perform a method that needs to be performed by the network device.

An embodiment of this application further provides a communication apparatus. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. When the processor executes the instructions stored in the memory, the processor is enabled to perform a method that needs to be performed by the first service device.

An embodiment of this application further provides a communication apparatus. The apparatus includes a transceiver, a memory, and a processor. The transceiver, the memory, and the processor communicate with each other by using an internal connection path. The memory is configured to store instructions. The processor is configured to execute the instructions stored in the memory, to control the transceiver to receive a signal and control the transceiver to send a signal. When the processor executes the instructions stored in the memory, the processor is enabled to perform a method that needs to be performed by a control device.

It should be understood that the processor may be a CPU, or may be another general-purpose processor, a digital signal processor (digital signal processing, DSP), an application specific integrated circuit (application specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor or any conventional processor or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a storage device type.

The memory may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs are available. For example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The storage medium stores at least one instruction, and the instruction is loaded and executed by a processor, so that a computer implements any one of the foregoing packet forwarding methods.

An embodiment of this application further provides a computer program (product). When the computer program is executed by a computer, a processor or the computer may be enabled to perform corresponding steps and/or procedures in the foregoing method embodiments.

An embodiment of this application further provides a chip, including a processor, configured to invoke instructions from a memory and execute the instructions stored in the memory, to enable a communication device on which the chip is installed to perform any one of the foregoing packet forwarding methods.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing packet forwarding methods.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on a computer, the procedure or functions according to this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk)), or the like.

A person of ordinary skill in the art may be aware that, with reference to the method steps and modules described in embodiments disclosed in this specification, the method steps and modules can be implemented by using software, hardware, firmware, or any combination thereof. To clearly describe interchangeability between the hardware and the software, the steps and compositions of embodiments have been generally described in terms of functions in the foregoing descriptions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

A person of ordinary skill in the art may understand that all or some of the steps of embodiments may be implemented by hardware or a program instructing related hardware. The program may be stored in a computer-readable storage medium. The storage medium may include: a read-only memory, a magnetic disk, or an optical disc.

When the software is used to implement embodiments, all or a part of embodiments may be implemented in a form of a computer program product. The computer program product includes one or more computer program instructions. In an example, the method according to embodiments of this application may be described in the context of machine-executable instructions. For example, the machine-executable instructions are included in a program module that is in a component for execution on a real or virtual processor of a target. Generally, the program module includes a routine, a program, a library, an object, a class, a component, a data structure, and the like, and executes a specific task or implements a specific abstract data structure. In various embodiments, the functions of the program modules may be combined or split between the described program modules. The machine-executable instructions for the program module may be executed locally or within a distributed device. In the distributed device, the program module may be located in both a local storage medium and a remote storage medium.

Computer program code for implementing the method in embodiments of this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of embodiments of this application, computer program code or related data may be carried in any appropriate carrier, so that the device, the apparatus, or the processor can perform various types of processing and operations described above. Examples of the carrier include a signal, a computer-readable medium, and the like.

Examples of the signal may include an electrical signal, an optical signal, a radio signal, a voice signal, or other forms of propagated signals, such as a carrier wave and an infrared signal.

A machine-readable medium may be any tangible medium that includes or stores programs for or with respect to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. A more detailed example of the machine-readable storage medium includes an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the module is merely division into logical functions and there may be other division modes during actual application. For example, a plurality of modules or components may be combined or may be integrated to another system, or some characteristics may be ignored or not executed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, to be specific, may be located at one position, or may be distributed on a plurality of network modules. Some or all of the modules may be selected based on actual requirements to implement the objectives of the solutions of embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

If the integrated module is implemented in the form of the software functional module and sold or used as an independent product, the integrated module may be stored in a computer-readable storage medium. Based on this understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The terms such as "first" and "second" in this application are used to distinguish between same or similar items with basically same roles and functions. It should be understood that there is no logical or time sequence between "first", "second", and "n^{th}", and neither a quantity nor an execution order is limited. It should also be understood that although the following descriptions use terms such as "first" and "second" to describe various elements, these elements should not be limited by the terms. These terms are simply used to distinguish one element from another. For example, a first image may be referred to as a second image, and similarly, a second image may be referred to as a first image without departing from the scope of the various examples. Both the first image and the second image may be images, and in some cases, may be separate and different images.

It should be further understood that, in embodiments of this application, sequence numbers of the processes do not mean execution sequences. The execution sequences of the processes should be determined based on functions and internal logic of the processes, and should not be construed as any limitation on implementation processes of embodiments of this application.

In this application, the term "at least one" means one or more, and the term "a plurality of" means two or more. For example, a plurality of second packets mean two or more second packets. The terms "system" and "network" are often used interchangeably herein.

It should be understood that the terms used in the descriptions of the various examples herein are merely intended to describe specific examples and are not intended to impose a limitation. The terms "one" ("a" and "an") and "the" of singular forms used in the descriptions of the various examples and the appended claims are also intended to include plural forms, unless otherwise specified in the context clearly.

It should be understood that, the term "and/or" used in this specification indicates and includes any or all possible combinations of one or more items in associated listed items. The term "and/or" describes an association relationship for describing associated objects and represents that three relationships may exist. For example, A and/or B may represent the following three cases: Only A exists, both Aand B exist, and only B exists. In addition, the character "/" in this application generally indicates an "or" relationship between the associated objects.

It should further be understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or components thereof not excluded.

It should be further understood that the terms "if" and "if" may be interpreted to mean "when" ("when" or "upon") or "in response to determining" or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

It should be understood that determining B based on A does not mean that B is determined based only on A, and B may alternatively be determined based on A and/or other information.

It should further be understood that "one embodiment", "an embodiment", and "a possible implementation" mentioned throughout the specification mean that a specific feature, structure, or characteristic related to the embodiment or an implementation is included in at least one embodiment of this application. Therefore, "in one embodiment" or "in an embodiment" or "a possible implementation" appearing throughout the specification may not necessarily refer to a same embodiment. In addition, these particular features, structures, or characteristics may be combined in one or more embodiments by using any appropriate manner.

The foregoing descriptions are merely optional embodiments of this application, but are not intended to limit this application. Any modification, equivalent replacement, or improvement made without departing from the principle of this application should fall within the protection scope of this application.

## Claims

1. A packet forwarding method, applied to a network device, wherein the method comprises:
obtaining a first packet and a second packet, wherein the first packet comprises a first user identifier, the second packet comprises a second user identifier, and the first user identifier is different from the second user identifier;
sending, on a basis that first node information in the first packet indicates a first resource pool, the first packet to a first service device corresponding to the first resource pool, wherein the first node information indicates a next hop on a forwarding path corresponding to the first packet, and the first user identifier comprised in the first packet is used by the first service device to determine, from the first resource pool, a value-added service corresponding to the first packet; and
sending, on a basis that the first node information in the second packet indicates the first resource pool, the second packet to the first service device corresponding to the first resource pool, wherein the first node information indicates a next hop on a forwarding path corresponding to the second packet, and the second user identifier comprised in the second packet is used by the first service device to determine, from the first resource pool, a value-added service corresponding to the second packet.

2. The method according to claim 1, wherein the first packet further comprises a first service chain path corresponding to the first packet, the first service chain path comprises node information of at least one resource pool that the first service chain path passes through, the second packet further comprises a second service chain path corresponding to the second packet, the second service chain path comprises node information of at least one resource pool that the second service chain path passes through, and the node information of the at least one resource pool comprises the first node information.

3. The method according to claim 1, wherein the obtaining a first packet and a second packet comprises:
receiving a third packet, obtaining a first service chain path corresponding to the third packet, and performing tunnel encapsulation on the third packet to obtain the first packet, wherein the first packet comprises the first service chain path; and
receiving a fourth packet, obtaining a second service chain path corresponding to the fourth packet, and performing tunnel encapsulation on the fourth packet to obtain the second packet, wherein the second packet comprises the second service chain path, wherein
the first service chain path comprises node information of at least one resource pool that the first service chain path passes through, the second service chain path comprises node information of at least one resource pool that the second service chain path passes through, and the node information of the at least one resource pool comprises the first node information.

4. The method according to claim 3, wherein the third packet further comprises a first service identifier, and the fourth packet further comprises a second service identifier;
the obtaining a first service chain path corresponding to the third packet comprises:
determining, from a plurality of optional service chain paths, an optional service chain path corresponding to the first service identifier, and using the optional service chain path corresponding to the first service identifier as the first service chain path corresponding to the third packet; and
the obtaining a second service chain path corresponding to the fourth packet comprises:
determining, from the plurality of optional service chain paths, an optional service chain path corresponding to the second service identifier, and using the optional service chain path corresponding to the second service identifier as the second service chain path corresponding to the fourth packet.

5. The method according to claim 4, wherein before the determining, from a plurality of optional service chain paths, an optional service chain path corresponding to the first service identifier, the method further comprises:
receiving the plurality of optional service chain paths sent by a control device, wherein any optional service chain path comprises node information of at least one resource pool that the optional service chain path passes through.

6. The method according to claim 4 or 5, wherein the first service identifier and the second service identifier are application identifiers, the first service identifier is carried in an application-aware networking APN identifier comprised in the first packet, and the second service identifier is carried in an APN identifier comprised in the second packet.

7. The method according to any one of claims 1 to 6, wherein the first packet and the second packet are segment routing over internet protocol version 6 SRv6 packets, and the first node information is a segment identifier SID of the first resource pool.

8. The method according to any one of claims 1 to 7, wherein the first user identifier is carried in the APN identifier comprised in the first packet, and the second user identifier is carried in the APN identifier comprised in the second packet.

9. A packet forwarding method, applied to a first service device, wherein the method comprises:
receiving a first packet and a second packet that are sent by a network device, wherein the first packet comprises a first user identifier, the second packet comprises a second user identifier, the first user identifier is different from the second user identifier, first node information in the first packet indicates that a next hop of the network device on a forwarding path of the first packet is a first resource pool, and the first node information in the second packet indicates that a next hop of the network device on a forwarding path of the second packet is the first resource pool; and
determining, from the first resource pool based on the first user identifier, a first value-added service corresponding to the first packet, and determining, from the first resource pool based on the second user identifier, a second value-added service corresponding to the second packet.

10. The method according to claim 9, wherein the determining, from the first resource pool based on the first user identifier, a first value-added service corresponding to the first packet, and determining, from the first resource pool based on the second user identifier, a second value-added service corresponding to the second packet comprises:
determining, based on a one-to-one correspondence between a plurality of identifiers and a plurality of value-added services, a value-added service corresponding to the first user identifier, and using the value-added service corresponding to the first user identifier as the first value-added service corresponding to the first packet; and
determining, based on the one-to-one correspondence between the plurality of identifiers and the plurality of value-added services, a value-added service corresponding to the second user identifier, and using the value-added service corresponding to the second user identifier as the second value-added service corresponding to the second packet.

11. The method according to claim 9 or 10, wherein the method further comprises:
sending, on a basis that second node information in the first packet indicates a second resource pool, the first packet to a second service device corresponding to the second resource pool, wherein the second node information indicates a next hop on the forwarding path corresponding to the first packet; and
sending, on a basis that third node information in the second packet indicates a third resource pool, the second packet to a third service device corresponding to the third resource pool, wherein the third node information indicates a next hop on the forwarding path corresponding to the second packet.

12. The method according to any one of claims 9 to 11, wherein after the determining, by the first service device from the first resource pool based on the first user identifier, a first value-added service corresponding to the first packet, and determining, from the first resource pool based on the second user identifier, a second value-added service corresponding to the second packet, the method further comprises:
invoking a resource corresponding to the first value-added service to perform value-added service processing on the first packet, and invoking a resource corresponding to the second value-added service to perform value-added service processing on the second packet.

13. The method according to any one of claims 9 to 12, wherein the first packet and the second packet are segment routing over internet protocol version 6 SRv6 packets, and the first node information is a segment identifier SID of the first resource pool.

14. The method according to any one of claims 9 to 13, wherein the first user identifier is carried in an application-aware networking APN identifier comprised in the first packet, and the second user identifier is carried in an APN identifier comprised in the second packet.

15. A packet forwarding method, applied to a control device, wherein the method comprises:
obtaining a plurality of optional service chain paths, wherein any optional service chain path comprises node information of at least one resource pool that the optional service chain path passes through, the plurality of optional service chain paths comprise a first service chain path corresponding to a first packet and a second service chain path corresponding to a second packet, first node information comprised in the first service chain path indicates a next hop of a network device on a forwarding path corresponding to the first packet, the first node information comprised in the second service chain path indicates a next hop of the network device on a forwarding path corresponding to the second packet, and the first node information indicates a first resource pool; and
sending the plurality of optional service chain paths to the network device, wherein the network device is configured to forward the first packet based on the first service chain path in the plurality optional service chain paths, and forward the second packet based on the second service chain path in the plurality of optional service chain paths.

16. The method according to claim 15, wherein the method further comprises:
obtaining segment identifiers SIDs respectively corresponding to a plurality of resource pools; and
the obtaining a plurality of optional service chain paths comprises:
performing path orchestration based on the SIDs respectively corresponding to the plurality of resource pools, to obtain the plurality of optional service chain paths, wherein the node information of the at least one resource pool comprised in the optional service chain path is a SID respectively corresponding to the at least one resource pool.

17. A packet forwarding method, wherein the method comprises:
obtaining, by a network device, a first packet and a second packet, wherein the first packet comprises a first user identifier, the second packet comprises a second user identifier, and the first user identifier is different from the second user identifier;
sending, by the network device on a basis that first node information in the first packet indicates a first resource pool, the first packet to a first service device corresponding to the first resource pool, wherein the first node information indicates a next hop on a forwarding path corresponding to the first packet; and sending, on a basis that the first node information in the second packet indicates the first resource pool, the second packet to the first service device corresponding to the first resource pool, wherein the first node information indicates a next hop on a forwarding path corresponding to the second packet;
receiving, by the first service device, the first packet and the second packet that are sent by the network device; and
determining, by the first service device from the first resource pool based on the first user identifier, a first value-added service corresponding to the first packet, and determining, from the first resource pool based on the second user identifier, a second value-added service corresponding to the second packet.

18. The method according to claim 17, wherein the method further comprises:
obtaining, by a control device, a plurality of optional service chain paths, wherein any optional service chain path comprises node information of at least one resource pool that the optional service chain path passes through, the plurality of optional service chain paths comprise a first service chain path corresponding to the first packet and a second service chain path corresponding to the second packet, the first node information comprised in the first service chain path indicates a next hop of the network device on the forwarding path corresponding to the first packet, the first node information comprised in the second service chain path indicates a next hop of the network device on the forwarding path corresponding to the second packet, and the first node information indicates the first resource pool; and
sending, by the control device, the plurality of optional service chain paths to the network device, wherein the plurality of optional service chain paths are used by the network device to obtain the first service chain path and the second service chain path.

19. A packet forwarding system, wherein the packet forwarding system comprises a network device, a first service device, and a control device, wherein
the network device is configured to perform the method according to any one of claims 1 to 8, the first service device is configured to perform the method according to any one of claims 9 to 14, and the control device is configured to perform the method according to claim 15 or 16.

20. A network device, wherein the network device comprises a processor, the processor is coupled to a memory, the memory stores at least one program instruction or code, and the at least one program instruction or the code is loaded and executed by the processor, to enable the network device to implement the packet forwarding method according to any one of claims 1 to 18.

21. A computer-readable storage medium, wherein the computer storage medium stores at least one instruction, and the at least one instruction is loaded and executed by a processor, to enable a computer to implement the packet forwarding method according to any one of claims 1 to 18.

22. A computer program product, wherein the computer program product comprises computer program code, and the computer program code is loaded and executed by a computer, to enable the computer to implement the packet forwarding method according to any one of claims 1 to 18.
